# NEUE EUROPÄISCHE PATENTSCHRIFT

(11) **EP 1 512 558 B2**
(45) Veröffentlichungstag und Bekanntmachung des Hinweises auf die Entscheidung über den Einspruch: **02.07.2014**
(45) Hinweis auf die Patenterteilung: 27.02.2008
(21) Anmeldenummer: 04017177.9
(22) Anmeldetag: 21.07.2004
(51) Int. Cl.: B60D 1/54, B60D 1/52

(54) **Anhängerkupplung für Kraftfahrzeuge**
Trailer hitch for motor vehicles
Dispositif d'attelage pour véhicules automobiles

(30) Priorität: 02.09.2003 DE 10340347
(43) Veröffentlichungstag der Anmeldung: 09.03.2005
(73) Patentinhaber: WESTFALIA - Automotive GmbH, 33378 Rheda-Wiedenbrück (DE)
(72) Erfinder: Aufderheide, Reinhold, 33397 Rietberg (DE); Domke, Friedrich, 33442 Herzebrock-Clarholz (DE); Hermbusch, Gerhard, 33449 Langenberg (DE); Krohn, Gerhard, 33378 Rheda-Wiedenbrück (DE); Peitz, Jürgen, 33378 Rheda-Wiedenbrück (DE); Wyrwich, Martin, 33378 Rheda-Wiedenbrück (DE)
(74) Vertreter: Kohlmann, Kai

(56) Entgegenhaltungen:
- EP-A- 1 024 036
- EP-A- 1 084 870
- EP-A- 1 142 732
- EP-A- 1 197 357
- EP-A- 1 275 533
- EP-A- 1 288 026
- DE-A- 19 858 978
- DE-U- 20 305 807

## Beschreibung

Die Erfindung betrifft eine Anhängerkupplung nach dem Oberbergriff des geltenden Anspruchs 1.

Bei einer durch die DE 198 59 961 A1 bekanntgewordenen Anhängerkupplung ist die fahrzeugfest angeordnete, schwenkbar sowie axial verschieblich gelagerte Kugelstange sowohl in ihrer Ruhelage als auch in ihrer Betriebslage über in Eingriff bringbare Formschlusskonturen einerseits des Kugelstangenlagerkopfes und andererseits eines diesem gegenüberliegenden Anbauflansches drehfest festlegbar. Die Kugelstange wird sowohl in der Ruhelage, in welcher sich die Kugelstange in etwa quer zur Fahrzeuglängsrichtung unter dem Stoßfänger befindet, als auch in der Betriebslage, in welcher sich die Kugelstange im wesentlichen in Fahrzeuglängsrichtung befindet, mittels der Formschlussverbindungen drehfest festgelegt. Die Formschlussverbindungen in Form einer Verzahnung sowie einer Gegenverzahnung greifen in den Drehendstellungen des Kugelstangenlagerkopfes ineinander.

Zum Festlegen und Freigeben dieser bekannten Kugelstange dient ein verstellbares, die Lagerhülse bzw. den Kugelstangenlagerkopf abstützendes Widerlager, das wie der Kugelstangenlagerkopf auf einem Lagerbolzen angeordnet ist, der über einen Befestigungsansatz bzw. Anbauflansch an einem mit dem Fahrzeug verbundenen Querrohr befestigt ist. In der einen Axialstellung des die Lagerhülse abstützenden Widerlagers stehen die Formschlusskonturen von Lagerbolzen und Lagerhülse so miteinander in Eingriff, dass die Lagerhülse und damit die Kugelstange gegenüber dem Fahrzeug nicht verdrehtwerden kann. In der zweiten Axialstellung, in der das Widerlager dann von dem Anbauflansch bzw. Befestigungsansatz entfernt ist, kann die Lagerhülse so weit von dem Anbauflansch des Lagerbolzens abgerückt werden, dass die Formschlusskonturen außer Eingriff kommen und danach die Lagerhülse samt daran angeordneter Kugelstange zwischen der Ruhe- und der Betriebslage verschwenkt werden kann. Die jeweilige Verriegelungsposition wird danach durch eine erneute Axialverschiebung des Widerlagers erreicht.

Eine durch die EP 1 024 036 A1 bekanntgewordene Anhängekupplung der eingangs genannten Art umfaßt eine Kupplungseinheit mit einem fahrzeugfest angeordneten Lagerteil und einem am Lagerteil gelagerten Schwenkteil mit einem Kugelhals und mit einer Kupplungskugel, welcher gegenüber dem Lagerteil um eine Achse zwischen einer Ruhestellung und einer Arbeitsstellung verschwenkbar ist, und eine mechanische Fixiereinrichtung, mit welcher der Kugelhals in der Arbeitsstellung gegenüber dem Lagerteil fixierbar ist. Die mechanische Fixiereinrichtung wird durch einen elastischen Kraftspeicher in Richtung ihrer den Kugelhals fixierenden Stellung beaufschlagt. Zum Bewegen des Kugelhalses aus der Arbeitsstellung heraus wird die Fixiereinrichtung mittels eines elektrisch betreibbaren Löseantriebs derart betätigt, daß der Kugelhals frei aus der Arbeitsstellung heraus bewegbar ist.

Weiterhin sind Anhängerkupplungen bekannt, die zum Festlegen und Freigeben der Kugelstange eine Verriegelung aufweisen, die einen gegen ein anstehendes Kraftelement, eine Druckfeder, über ein von außen betätigbares Druck- oder Zugmittel zurückstellbaren Sperrbolzen besitzt, dem radial ein- und ausrückbare Rastmittel, insbesondere Kugeln, zugeordnet sind, wie aus der DE-U 94 08 478.5 bekannt. Das Vorspannen einer Druckfeder erfolgt hierbei mittels eines Handrades, über das eine Zahnstange einen Bowdenzug als Verbindung zum Sperrbolzen betätigt.

Aus der EP 0 850 147 B1 ist eine Anhängerkupplung mit einem motorischen Antrieb unter Zwischenschaltung eines Umlaufrädergetriebes zum Verschwenken der Kugelstange zwischen ihrer Ruhe- und ihrer Betriebsstellung bekannt. Die Kugelstange selbst ist hierbei als Teil einer Spindel eines Spindel-Mutter-Antriebes ausgebildet und axial verstellbar. Sie besitzt eine eingeschraubte Verstellspindel, die über ein Stirnrad- sowie Planetengetriebe von einem elektrischen Motor gedreht wird. Die Kugelstange ist in einer Führungshülse angeordnet, die mit einer Zwangsführung ausgebildet ist und bewirkt, dass nach einem geführten Axial-Verstellweg die Kugelstange dann mit in ihrer Betriebsstellung nach oben zeigender Kugel gedreht wird.

Der Erfindung liegt die Aufgabe zugrunde, bei einer Anhängerkupplung der eingangs genannten Art mit einfachen Mitteln ein betriebssicheres Auslösen der Verriegelung zum Schwenken der Kugelstange zu ermöglichen, wobei ein weitestgehend wartungsfreies System angestrebt wird. Diese Aufgabe wird durch eine Anhängerkupplung mit den Merkmalen des Anspruchs 1 gelöst. Der Sperrbolzen ist zentral in einer Hohlwelle angeordnet, auf der der Kugelstangenlagerkopf gelagert ist. Durch die Abkehr von einer auf einem Lagerbolzen bzw. einer durchgängigen Lagerachse gelagerten Kugelstange, die somit vielmehr auf einer Hohlwelle mit zentral integrierter Verriegelung angeordnet ist, lässt sich ein in sich geschlossenes, weitestgehend wartungsfreies System erreichen.

Der Sperrbolzen ist zur Antriebsseite hin mit einer Axial-Schubstange ausgebildet und über die Axial-Schubstange motorisch ausrückbar an den Antrieb angeschlossen ist. Es lässt sich damit der Sperrbolzen bei Betätigung des Antriebs direkt gegen das Kraftelement, z.B. eine sich dabei vorspannende Druckfeder, zurückziehen bzw. ausrükken, so dass die Formschlussverbindung, z. B. Kugeln des Kugelstangenlagerkopfes, denen in dem Anbauflansch Kalotten zugeordnet sind, freikommt. Die somit entriegelte Kugelstange kann dann unter der Schwerkraft bei gleichzeitiger axialer Verschiebung in eine Zwischenposition schwenken. Aus dieser heraus lässt sie sich manuell in die gewünschte, vorzugsweise durch einen äußeren Anschlag gesicherte Drehendlage verschwenken und verriegeln, wozu dem Kraftelement die Entspannung ermöglicht wird, so dass der Sperrbolzen vorrücken und die Rastelemente wieder nach außen in ihre Einrastposition drücken kann. Die Lage der in ihre Betriebs- oder Ruhestellung verschwenkten Kugelstange ist danach bis zu einem neuen motorischen Auslösen, d.h. Ausrücken des Sperrbolzens gesichert.

Die nach dem Ausrücken des Sperrbolzens voneinander entfernten Formschlußkonturen werden im übrigen von einem Distanzhalterelement während der gesamten sich anschließenden Verschwenkung der Kugelstange bis in deren Endposition aufrechterhalten. Erst wenn diese erreicht ist, wird das Distanzhalterelement wirkungslos, indem es z.B. in eine in der Endposition im gegenüberliegenden Bauteil (z.B. Stirnfläche des Kugelstangenlagerkopfes) angeordnete, korrespondierende Öffnung bzw. Ausnehmung eintaucht bzw. -greift. Das ist der Zeitpunkt, zu dem das vorgespannte Kraftelement den Sperrbolzen in seine Verriegelungslage vorrückt und die Formschlusskonturen wieder in Eingriff bringt.

Eine Ausführung der Erfindung sieht vor, dass das antriebsseitige, durch den Anbauflansch hindurchgeführte Ende der Axial-Schubstange als Zahnstange ausgebildet ist, die mit einem Zahnelement kämmt, das temporär antriebsmäßig über einen Mitnehmerstift mit einem von einem Motorritzel beaufschlagten Antriebsrad verbindbar ist. Das Zahnelement, ausgestaltungsgemäß vorteilhaft ein Ritzel mit zumindest einer Teilverzahnung im Eingriffsbereich mit der Zahnstange oder alternativ auch nur ein Zahnsegment, macht hierbei nur eine oszillierende bzw. pendelnde Bewegung, d.h. keine volle Umdrehung, und zwar diese Teilbewegung nur dann, wenn der nach einem Vorschlag der Erfindung mit Kraftbeaufschlagung in Richtung auf das Zahnelement in einer Bohrung eines Zylinderkörpers des Antriebsrades oder eines Zylinderkörpers des Zahnelementes angeordnete Mitnehmerstift von dem Kraftelement, vorteilhaft eine Druckfeder, in das Zahnelement oder das Antriebsrad eingerückt worden ist. Dieses Einrücken zur Mitnahme und damit Übertragung der Drehbewegung des Antriebsrades auf das Zahnelement zum Ausrücken der Zahnstange mit dem Sperrbolzen gegen die Kraft des auf diesen einwirkenden Kraftelementes setzt dann ein, wenn die bis dahin bewegungssicher gehaltene Zahnstange für eine axiale Hubbewegung entsichert worden ist.

Die Erfindung sieht hierzu vor, dass das Antriebsrad in einem außerhalb der Umlaufbahn des Zylinderkörpers liegenden Teilabschnitt mit einem Kurvensegment versehen ist, dem ein gegen das Antriebsrad abgestützter, mit einer Einschnürung ausgebildeter Sicherungsbolzen zugeordnet ist, wobei die Einschnürung temporär aus ihrer in die Zahnstange eingreifenden Position verlagerbar ist. Sobald nämlich das rotierende Antriebsrad das Kurvensegment vor den Sicherungsbolzen bewegt hat, wird der Sicherungsbolzen gegen eine Federkraft angehoben bzw. gedrückt, bis die Einschnürung über der Zahnstange liegt, die damit den notwendigen Freiraum zum Passieren des Sicherungsbolzens hat. Das gleichzeitig über den federbelasteten Mitnehmerstift mit dem Antriebsrad verbundene, mit der Zahnstange in Eingriff befindliche Zahnelement kann die Zahnstange damit bis zur entriegelten Endlage des Sperrbolzens axial ausrücken. In der Hub-Endlage drückt ein beispielsweise gehäusefestes Gegenmittel, z.B. eine Kulisse in Form einer Kugel, den Mitnehmerstift gegen die Federkraft aus seiner mit dem Zahnelement oder dem Antriebsrad wirksamen Mitnahme-Eingriffsposition. Das Antriebsrad dreht danach ohne Bewegungsübertragung durch; der Antrieb kann nach einer vollen Umdrehung gezielt abgeschaltet werden. Wenn sich das Kurvensegment mit der Bewegung des Antriebsrades entsprechend von dem Sicherungsbolzen entfernt und mit diesem keinen Kontakt mehr hat, fällt federbelastet der Sicherungsbolzen mit seiner Einschnürung auf die Zahnstange. Der Sperrbolzen und die Zahnstange sind damit frei vom Antrieb, so dass der Motor nicht mitgezogen werden kann, und unterliegen keinen Betriebslasten bzw. -kräften. Sobald dann die Kugelstange in ihre Betriebs- oder Ruhestellung geschwenkt worden ist, schiebt das vorgespannte Kraftelement den Sperrbolzen mit der nacheilenden Zahnstange nach vorne in die Verriegelungsposition. Gleichzeitig wird der Sicherungsbolzen unter der Kraft der sich entspannenden Feder nach unten gedrückt und sperrt dann den Axialweg der Zahnstange im verriegelten Zustand der Kugelstange.

Es wird erfindungsgemäß vorgeschlagen, dass das Kurvensegment an seinem in Drehrichtung des Antriebsrades vorderen Ende mit einer allmählich ansteigenden, konvexen Anlauffläche und an seinem hinteren Ende mit einer steil abfallenden, mit konkaver Krümmung auslaufenden Ablauffläche ausgebildet ist. Einem eher sanftem Anlauf bzw. Anheben zum Freimachen des Ausrückweges folgt damit ein abruptes Herunterfallen des Sicherungsbolzens in seine sich mit der Einschnürung über bzw. auf die Zahnstange legenden Position.

Wenn die Zahnstange an ihrer der Einschnürung des Sicherungsbolzens zugewandten Seite mit einer Abflachung ausgebildet ist, lässt sich damit einerseits eine Verdrehsicherung, andererseits ein einfacheres Passieren der Einschnürung erreichen.

Nach einer anderen bevorzugten Ausführung der Erfindung ist die Axial-Schubstange an ihrem vorderen, von dem Sperrbolzen entfernten Ende mit einem Querbolzen versehen, dem auf einer Welle des Antriebs zur Mitnahme und Hubbegrenzung Steuerscheiben zugeordnet sind. Diese Ausführung erfordert keine Zahnräder bzw. Zahnstangenelemente, sondern die funktionell aufeinander angepaßten und entsprechend ausgebildeten Steuerscheiben, die sämtlich von dem Antrieb gleichgerichtet gedreht werden, gewährleisten die Mitnahme und Hubbegrenzung.

Die Steuerscheiben sind erfindungsgemäß mit nasenartigen Nockenvorsprüngen ausgebildet und derart angeordnet, dass innenliegende Steuerscheiben mit ihren nasenartigen Nockenvorsprüngen entgegengesetzt, in Drehrichtung nach unten weisend, zu den nasenartigen Nockenvorsprüngen der äußeren Steuerscheiben ausgerichtet angeordnet sind. Die Steuerscheiben lassen sich so vorsehen, dass die äußeren Steuerscheiben die Sperrung zur Hubbeaufschlagung der Axial-Schubstange aufheben und die innenliegenden Steuerscheiben die Axial-Schubstange mit dem Sperrbolzen ausrücken. Hierbei kommen vorteilhaft vier Steuerscheiben zum Einsatz, d.h. die beiden innenliegenden Steuerscheiben und je eine äußere Steuerscheibe.

Nach einer vorzugsweisen Ausgestaltung ist ein in einem auf dem Antriebsgehäuse befestigten Aufnahmemittel, beispielsweise ein Gabelkopf oder ein Gehäuse, mit einer Schwenkachse gelagerter Wipphebel gegen die Steuerscheiben kraftbeaufschlagt, wobei der Wipphebel im Hubweg der Axial-Schubstange, d.h. innen liegende Anschlagbegrenzungen für den Querbolzen aufweist. In dieser Anordnung heben die äußeren Steuerscheiben den Wipphebel gegen eine Kraft an, z.B. von Federn, insbesondere Druckfedern, die das hintere Ende des Wipphebels beaufschlagen, so daß die beiden innenliegenden Steuerscheiben passieren können, mit ihren nasenartigen Nockenvorsprüngen zur Anlage an den Querbolzen gelangen und über diesen die Axial-Schubstange mit dem Sperrbolzen nach hinten ziehen bzw. ausrücken. Sobald der Querbolzen die nach innen vorkragenden Anschlagbegrenzungen passiert bzw. deren deckungsgleiche Position erreicht hat, ist der Ausrückhub beendet, verlieren der Querbolzen und der Wipphebel ihren Halt zu den ihnen zugeordneten inneren bzw. äußeren Scheiben, die in der Folge gleichmäßig weiterdrehen. Nach einer vollen Umdrehung schaltet eine Sensorik den Antrieb gezielt ab. Nach dem Verschwenken der entriegelten Kugelstange in ihre Betriebslage rückt das sich entspannende Kraftelement den Sperrbolzen in seine die Formschlussverbindung von Kugelstangenlagerkopf und Anbauflansch verriegelnde Position zurück. Die Steuerscheiben stehen für eine erneute Ausrückbewegung von Axial-Schubstange und Sperrbolzen bereit. Hierbei erfüllt der Wipphebel eine weitere Funktion; indem nämlich das vordere Hebelende auf Block mit den innenliegenden Steuerscheiben gelangt, deren nach unten weisenden Nockenvorsprünge sich an das vordere Hebelende anlegen, können auch Massenträgheiten die Steuerscheiben nicht weiterdrehen.

Nach einer erfindungsgemäßen Ausgestaltung sind dem Sperrbolzen in zwei im Abstand parallel voneinander vorgesehenen Radialebenen gegenläufig wirkende Rastmittel zugeordnet. Hierbei lässt sich mit ausschließlich der hinteren, dem Anbauflansch zugewandten Ebene in den Drehendlagen der Kugelstange deren Verriegelung begünstigen, wobei die dortigen Rastmittel (Kugeln) den Kugelstangenlagerkopf in diese Ebene hineinziehen. Dagegen sind die Rastmittel der vorderen Radialebene in diesem Betriebszustand für die Verriegelung der Formschlußkonturen unwirksam. Beim Auslösen zum Verschwenken des Kugelstangenlagerkopfes unterstützen dann aber die Rastmittel (Kugeln) der vorderen Radialebene das Abdrücken des Kugelstangenlagerkopfes aus seiner Formschlussverbindung mit dem Anbauflansch, weil die Rastmittel der vorderen Radialebene den Kugelstangenlagerkopf zusätzlich definiert in Löserichtung wegdrücken. Diese unterstützende Beaufschlagung des Kugelstangenlagerkopfes in Löserichtung gewährleistet, dass ein Ausrücken der Kugelstange auch bei tiefen Temperaturen oder bei Verschmutzung der Anhängerkupplung, zumal wenn diese lange nicht benutzt und betätigt worden ist, mit dann möglicherweise in ihren Sitzen verbackenen Rastmitteln ohne Beschädigungen hervorzurufen möglich ist.

Weitere Merkmale und Einzelheiten der Erfindung ergeben sich aus den Ansprüchen und der nachfolgenden Beschreibung von in den Zeichnungen schematisch dargestellten Ausführungsbeispielen der Erfindung. Es zeigen:
- Fig. 1: in einer perspektivischen Gesamtansicht eine ohne motorische Hub-Ausrückung gezeigte Anhängerkupplung mit in ihrer Ruhelage verriegelter Kugelstange, in der sich diese unter einem Stoßfänger eines nicht dargestellten Kraftfahrzeugs befindet;
- Fig. 2: in einer perspektivischen Gesamtansicht als Einzelheit einer Anhängerkupplung, in schematischer Weise ohne Kugelstange dargestellt, eine Ausführung einer motorischen Hub-Ausrückung eines die Kugelstange in ihren Endlagen verriegelnden Sperrbolzens;
- Fig. 3: den Gegenstand der Fig. 2 in einer schematischen Ansicht von der Antriebsseite her gesehen;
- Fig. 4: in schematischer Weise eine andere Ansicht der Gegenstände der Fig. 2 und 3;
- Fig. 5: als Einzelheit ohne Kugelstange eine andere Ausführung einer motorbetriebenen Hub-Ausrückung für den Sperrbolzen;
- Fig. 6: einen Schnitt entlang der Linie VI-VI von Fig. 5,
- Fig. 7: die Ausführung nach den Fig. 5 und 6 in einer vereinfachten Darstellung;
- Fig. 8: einen Schnitt entlang der Linie D-D von Fig. 7;
- Fig. 9: einen Schnitt entlang der Linie A-A von Fig. 7;
- Fig.10: einen Schnitt entlang der Linie E-E von Fig. 7;
- Fig.11: einen Schnitt entlang der Linie B-B von Fig. 9;
- Fig.12: einen Schnitt entlang der Linie C-C von Fig. 9;
- Fig.13: als Einzelheit einer weiteren Ausführung einer motorbetriebenen Hub-Ausrückung den über eine Axial-Schubstange mit einer Steuerscheiben-Anordnung des Antriebs verbundenen Sperrbolzen;
- Fig.14: einen Schnitt entlang der Linie IX-IX von Fig. 13,
- Fig.15: einen Schnitt entlang der Linie VIII-VIII von Fig. 13;
- Fig.16: einen Schnitt entlang der Linie X-X von Fig. 13,
- Fig:17: als Einzelheit der Fig. 1 bis 3 eine Draufsicht auf das Antriebsrad;
- Fig.18: das Antriebsrad nach Fig. 17 in einer rückwärtigen Vorderansicht;
- Fig.19: eine perspektivische Darstellung des Antriebsrades nach den Fig. 17 und 18;
- Fig.20: als Einzelheit des Antriebsrades der Fig. 17 bis 19 ein mit dem Antriebsrad einstückiges Kurvensegment;
- Fig.21: als Einzelheit der motorbetriebenen Ausrückhub-Anordnung der Fig. 2 bis 12 eine vorne als Zahnstange ausgebildete Axial-Schubstange; und
- Fig.22: als Einzelheit der motorbetriebenen Ausrück-Hubanordnung gemäß den Fig. 2 bis 12 einen Sicherungsbolzen.

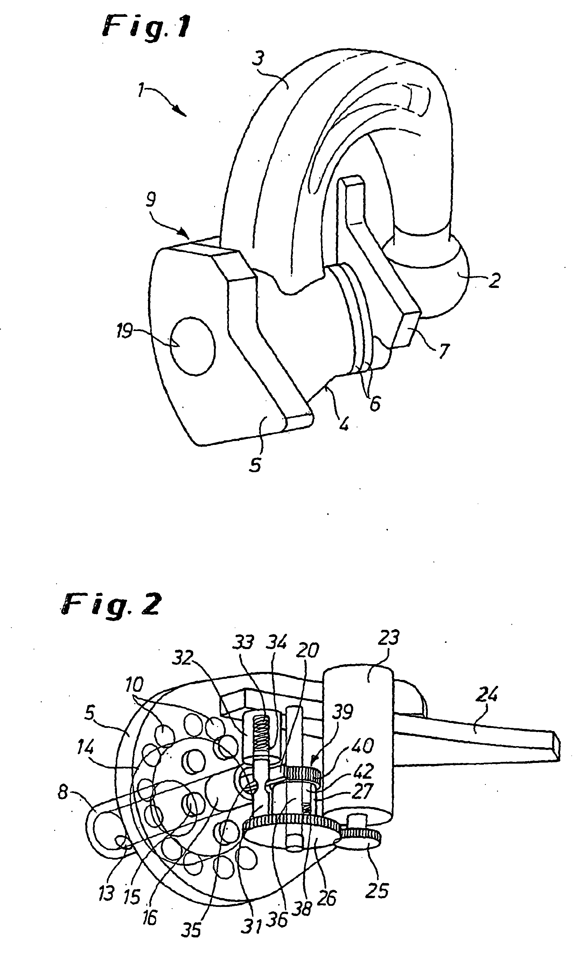

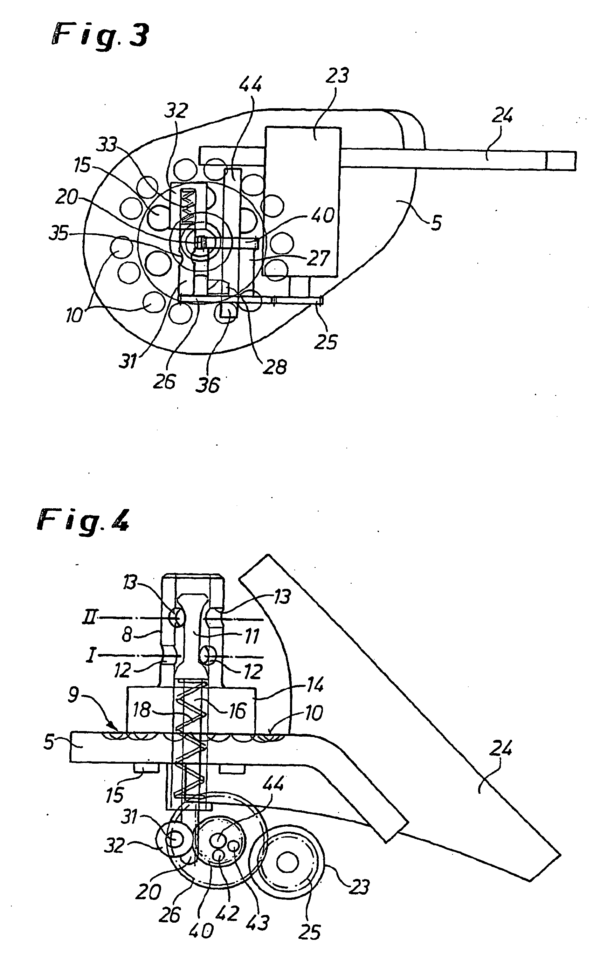

Eine in Fig. 1 dargestellte Anhängerkupplung 1 ist über einen ein- oder mehrteiligen Querträger an einem nicht dargestellten Fahrzeug befestigt. Die Anhängerkupplung 1 umfaßt im Ausführungsbeispiel eine gekröpfte, an ihrem freien Ende eine Kupplungskugel 2 tragende Kugelstange 3 in ihrer unter das Fahrzeug hinter dem Stoßfänger verschwenkten Ruhelage, die mit ihrem Kugelstangenlagerkopf 4 zwischen einem Anbauflansch 5 und einem hier unter Zwischenschaltung einer Ausgleichsscheibe 6 gegenüberliegenden Verbindungsblech 7 angeordnet ist. Statt einer Befestigung zusätzlich über ein Verbindungsblech 7 mit vorgeschalteter Ausgleichsscheibe 6 kann die Kugelstange 3 an diesem Ende auch durch Endkappen bzw. -hülsen verschlossen und nur über den Anbauflansch, gegebenenfalls unter Einbeziehung eines Knotenbleches, befestigt werden. Die Halterung des Kugelstangenlagerkopfes 4 in seiner Einbaulage erfolgt mittels einer Hohlwelle 8 (vgl. die Fig. 2, 4 und 5), auf der die Kugelstange 3 mit ihrem Kugelstangenlagerkopf 4 gelagert ist, wozu die Hohlwelle 8 einen ringartigen Kragen 14 aufweist, über den sie zudem mittels Schrauben 15 mit dem Anbauflansch 5 verschraubt ist.

Sowohl in der Ruhestellung nach Fig. 1 als auch in der die Betriebsstellung der Kugelstange 3 definierenden Drehendlage ist die Kugelstange 3 drehfest verriegelt. Hierzu ist einerseits eine Formschlussverbindung 9, bestehend in den Ausführungsbeispielen aus Kugelkalotten 10 des Anbauflansches 5 (vgl. die Fig. 2 bis 6) und diesen in der gegenüberliegenden Stirnfläche des Kugelstangenlagerkopfes 4 zugeordneten Kugeln (nicht gezeigt), in Eingriff. Andererseits befindet sich ein zentral in der Hohlwelle 8 angeordneter, an seinem vorderen Ende hundeknochenartig ausgebildeter Sperrbolzen 11 in einer Sperrlage. Zur Verriegelung der Drehendlagen sind für den Sperrbolzen 11 in einer hinteren Radialebene 1 in Radialbohrungen 12 der Hohlwelle 8 mehrere Rastmittel in Form von Kugeln vorgesehen, die von dem Sperrbolzen 11 nach außen gedrückt werden und dabei in eine ihnen in einem Lagerring des Kugelstangenlagerkopfes 4 zugeordnete Aufnahme, ausgebildet beispielsweise als Ringnut oder Rille (nicht gezeigt), bewegt werden. Diese Aufnahme ist an ihrer zu dem Anbauflansch 5 hin gerichteten Lauffläche mit einer Anlaufschräge versehen, die in der in den Drehendlagen verriegelten Position der Kugelstange 3 eine gezielt ausgerichtete Kraft zur unterstützenden axialen Beaufschlagung der Kugelstange 3 bzw. des Kugelstangenlagerkopfes 4 in Richtung auf den Anbauflansch 5 bewirkt.

Dem Sperrbolzen 11 sind in einer zweiten, vorderen Radialebene II in Radialbohrungen 13 der Hohlwelle 8 umfangsverteilt weitere Rastmittel in Form von Kugeln und eine Aufnahme, ausgebildet beispielsweise wiederum als Ringnut oder Rille eines Lagerringes, zugeordnet. Diese vordere Aufnahme ist mit einer Anlaufschräge ausgebildet, die eine gezielt gegenläufig zur Anlaufschräge der vorderen Radialebene ausgerichtete Kraft, nämlich weg vom Anbauflansch 5 bewirkt. In der Verriegelungsposition mit in Eingriff befindlicher Formschlussverbindung 9 sind die Kugeln der vorderen Radialebene 11 unwirksam; sie sind aus ihrer Aufnahme herausgetreten und in ihren Radialbohrungen 13 nach innen gefallen. Um diesen Freiraum zu schaffen, ist das vordere Ende des Sperrbolzens 11 hundeknochenartig und somit einem geringeren Durchmesser in diesem Bereich ausgebildet. Zur Offenbarung der vorbeschriebenen Zwei-Ebenen-Verriegelung sowie prinzipiell der Lagerung einer Kugelstange auf einer Hohlwelle wird Bezug genommen auf die ältere Patentanmeldung Nr. 103 20 302.8.

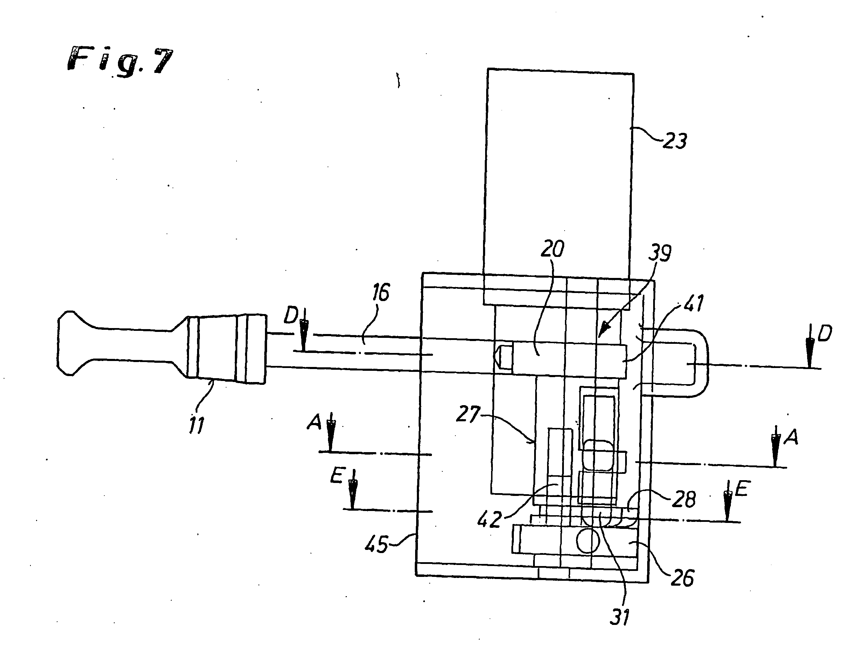

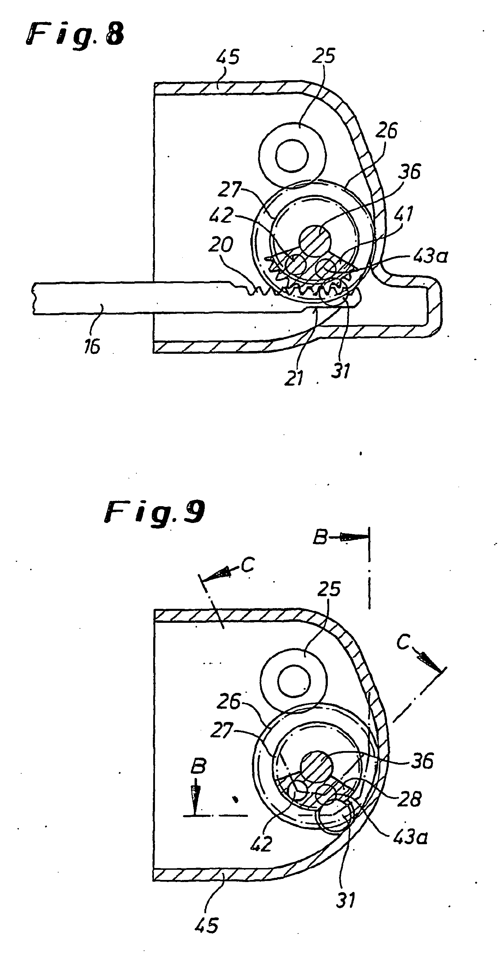

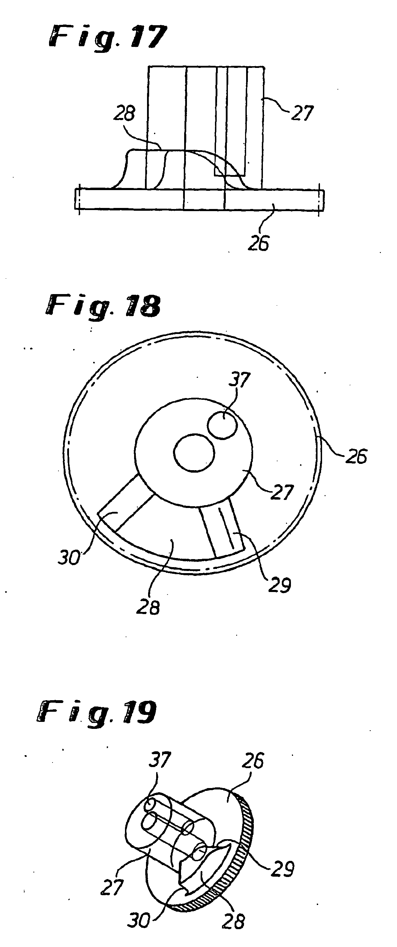

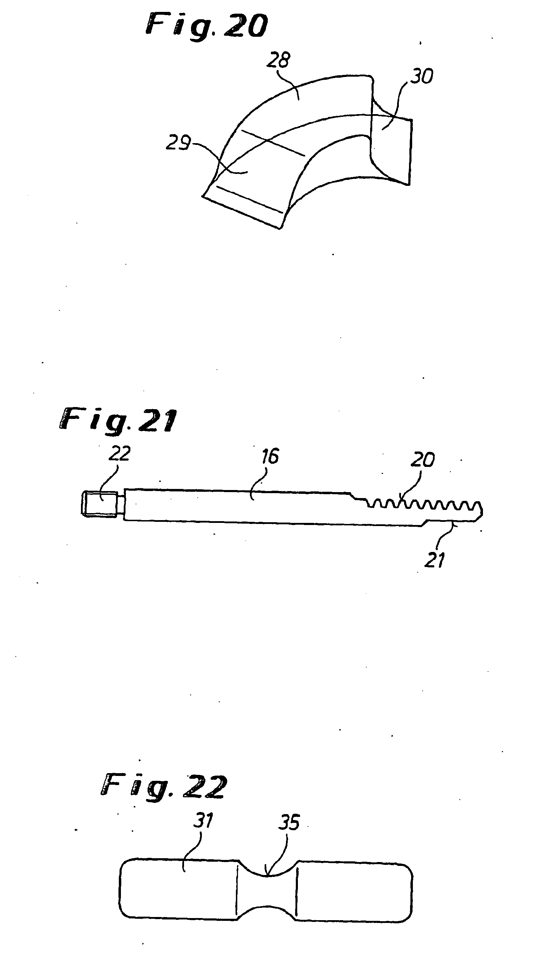

Zum Auslösen und damit Entsperren der Formschlussverbindung 9 und der Verriegelung des Sperrbolzens 11 ist dieser mit einer Axial-Schubstange 16 bzw. 17 verbunden, die eine in einem Hohlraum abgestützte, den Sperrbolzen 11 nach vorne in Einrückrichtung beaufschlagende Druckfeder 18 aufweist. Die Axial-Schubstange 16 bzw. 17 ist durch eine Bohrung 19 (vgl. Fig. 1) des Anbauflansches 5, dem zur Verstärkung ein Knotenblech 24 zugeordnet ist, über diesen hinaus vorkragend vorgesehen und bei den Ausführungsbeispielen nach den Fig. 2 bis 12 an ihrem vorderen Ende als Zahnstange 20 ausgebildet, die wie Fig. 21 zeigt unterhalb des Zahnstangenabschnitts mit einer Abflachung 21 versehen ist. Die Axial-Schubstange 16 wird über einen Gewindekopf 22 in den Sperrbolzen 11 1 eingeschraubt. Zum Entriegeln und Ausrücken des Sperrbolzens 11 ist die Zahnstange 20 an einen elektrischen Antrieb bzw. Motor 23 angeschlossen. Bei der Ausführung nach den Fig. 2 bis 12 kämmt ein Motorritzel 25 mit einem Antriebsrad 26. Das im einzelnen in den Fig. 17 bis 19 dargestellte Antriebsrad 26 ist einstükkig mit einem Zylinderkörper 27 und einem auf seiner inneren Stirnfläche außerhalb der Umlaufbahn des Zylinderkörpers 27 angeordnetem Kurvensegment 28 versehen. Dieses besitzt (vgl. Fig. 20) an seinem in Drehrichtung des Antriebsrades 26 vorderen Ende eine allmählich ansteigende, konvexe Anlauffläche 29 und an seinem hinteren Ende eine steil abfallende, mit konkaver Krümmung auslaufende Ablauffläche 30.

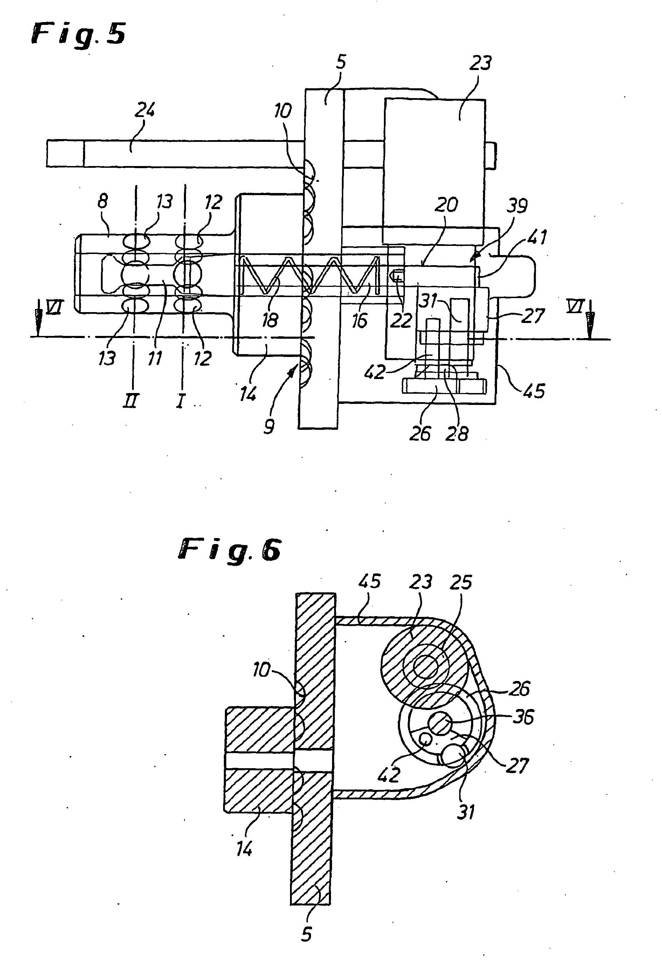

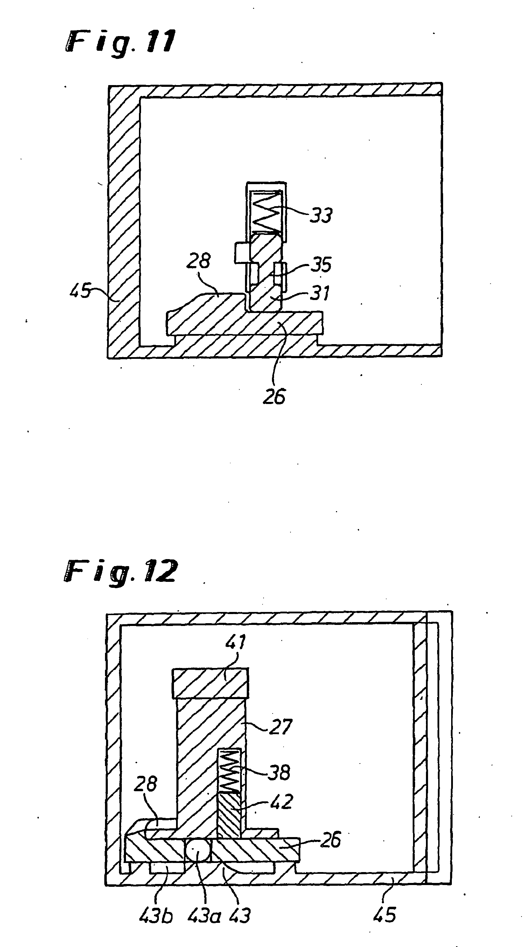

Dem Kurvensegment 28 ist ein Sicherungsbolzen 31 (als Einzelheit in Fig. 22 gezeigt) zugeordnet, der von einer in einer Bohrung 34 eines Stützblockes 32 vorgesehenen Druckfeder 33 in Richtung auf das Antriebsrad 26 abgestützt und in der Mitte mit einer Einschnürung 35 versehen ist. Parallel zur Drehachse 36 des Antriebsrades 26 ist in einer Bohrung 37 (vgl. Fig. 19) des Zylinderkörpers 27 ein von einer Druckfeder 38 in Richtung auf ein dem dortigen Ende des Zylinderkörpers 27 unmittelbar benachbart angeordnetes, von einer mit der Drehachse 36 des Antriebsrades 26 fluchtenden Achse 44 getragenes Zahnelement 39 - nach den Fig. 2 bis 4 ein Ritzel 40 und nach den Fig. 5 bis 12 ein Zahnsegment 41 - beaufschlagter Mitnehmerstift 42 vorgesehen. Diesem ist in seiner Umlaufbahn liegend an einem Fixpunkt eine Kulisse 43 oder dergleichen (vgl. Fig. 12) zugeordnet, die beim Auftreffen auf den Mitnehmerstift 42 dessen das Ritzel 40 mitnehmende Wirkung aufhebt, worauf das Antriebsrad 26 allein weiter dreht.

Um den Sperrbolzen 11 auszurücken und damit einhergehend die Formschlußverbindung 9 der Kugelstange 3 aufzuheben, so dass die Kugelstange 3 verschwenken kann, dreht der elektrische Antrieb 23 über das Motorritzel 25 das Antriebsrad 26 mit seinem Kurvensegment 28 zu dem die Zahnstange 20 kreuzenden und sperrenden Sicherungsbolzen 31. Durch die Konturgebung der Anlauffläche 29 hebt das Kurvensegment 28 den Sicherungsbolzen 31 an, bis sich dessen Einschnürung 35 über der Zahnstange 20 befindet, die damit einen freien Durchgang hat, was durch ihre Abflachung 21 noch begünstigt wird. Das mit der Zahnstange 20 kämmende, dann von dem Mitnehmerstift 42 entsprechend der Rotation des Antriebsrades 26 mitbewegte Ritzel 40 rückt den Sperrbolzen 11 damit gegen die Kraft der sich dabei vorspannenden Druckfeder 18 aus und gibt die Kugelstange frei. Sobald das Kurvensegment 28 den Sicherungsbolzen 31 passiert hat, fällt dieser bei Erreichen der Ablauffläche 30 auf die Zahnstange 20 herunter.

Wenn die Kugelstange 3 dann ihre verschwenkte, neue Betriebslage einnimmt, schiebt die sich dann entspannende Druckfeder 18 die Zahnstange 20 und folglich den Sperrbolzen 11 mittels der Zahnstange 20 in seine Verriegelungsposition nach vorne zurück. Der Sicherungsbolzen 31 fällt von der Axial-Schubstange 16 in die Abflachung 21 der Zahnstange 20. Die Zahnstange 20 ist danach sowohl gegen Verdrehen als auch gegen axiales Ausrücken gesichert.

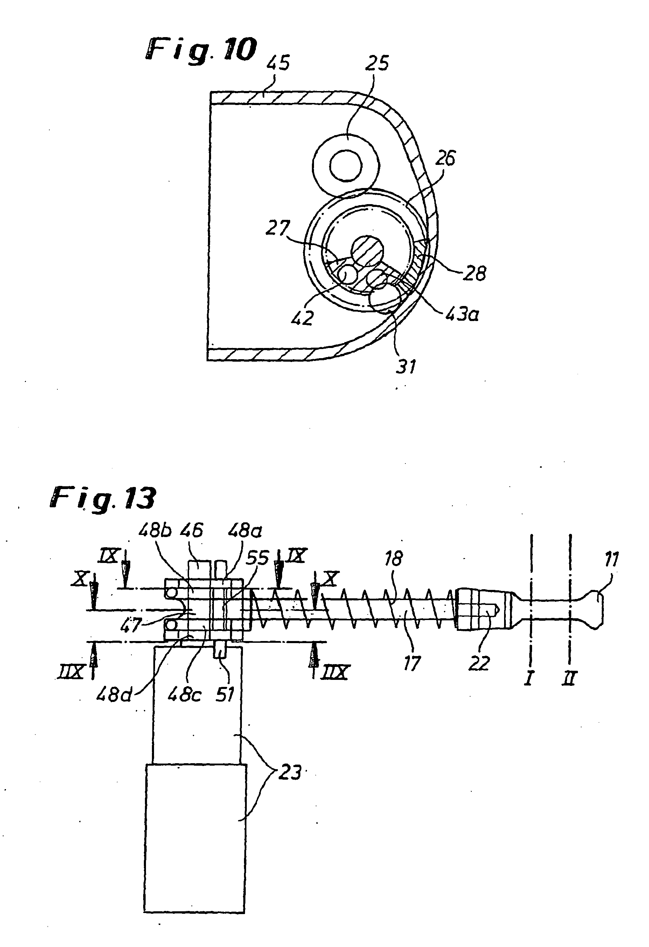

Bei der Ausführung nach den Fig. 5 bis 12, die auch eine Einhausung 45 zeigen, in der alle Bewegungsteile des Antriebs geschützt untergebracht sind, ist nicht das Antriebsrad 26, sondern das hier als ein in dem Gehäuse 45 pendelnd verschwenkbar gelagertes, mit der Zahnstange 20 temporär kämmendes Zahnsegment 41 mit dem Zylinderkörper 27 versehen, der hier formangepaßt zum Zahnsegment 20 als Zylindersegment ausgebildet ist. Dieses nimmt in einer Bohrung den Mitnehmerstift 42 auf (vgl. Fig. 12), der sich wie der zum Mitnehmerstift 42 parallel nach außen versetzte Sicherungsbolzen 31 (vgl. Fig. 10) federbeaufschlagt gegen in diesem Fall das Antriebsrad 26 abstützt. Das Ausrücken des Sperrbolzens 11 über die Zahnstange 20 durch Bewegungsübertragung von dem in das Antriebsrad 26 eingreifenden Mitnehmerstift 42 auf das Zahnsegment 41 sowie das Abheben und Herunterfallen des die Einschnürung 35 aufweisenden Sicherungsbolzens 31, wenn dieser auf das Kurvensegment 28 des Antriebsrades 26 auf- bzw. abläuft (vgl. Fig. 11), geschieht in der im Zusammenhang mit den Fig. 2 bis 4 beschriebenen Weise.

Der Figur 12 läßt sich deutlich die Kulisse 43 zum Verstellen des Mitnehmerstiftes 42 in seine in das Antriebsrad 26 eingreifende Mitnahmeposition bzw. in seine Außereingriffsposition, wie dargestellt, entnehmen. Erst wenn eine die Bohrung im Antriebsrad 26 sperrende Kugel 43a von der Kulisse 43 in eine benachbart dazu vorgesehene Vertiefung 43b heruntergefallen ist, kann der Mitnehmerstift von der Feder 38 beaufschlagt in die Bohrung eingreifen, worauf die Drehbewegung des Antriebsrades 26 auf das Zahnsegment 41, das mit der Zahnstange 20 der Axial-Schubstange 16 kämmt, übertragen wird. Sobald die Kugel 43a dann wieder auf die Kulisse 43 aufläuft, drückt sie den Mitnehmerstift 42 gegen die Feder 38 in seine gezeigte wirkungslose Position, so dass das Antriebsrad 26 allein weiter dreht; das Zahnsegment 41 führt somit lediglich eine pendelnde Bewegung aus.

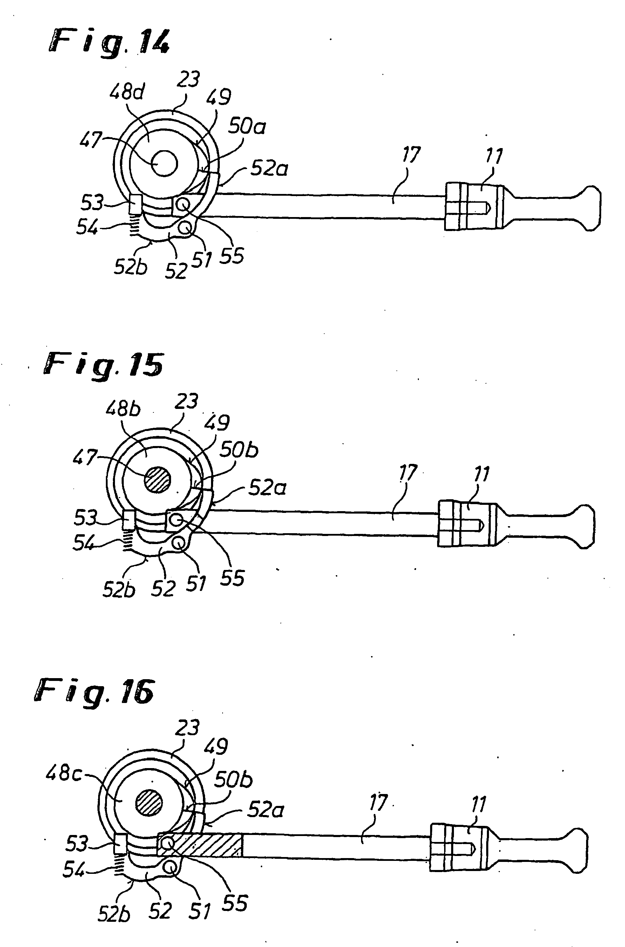

Eine andere, der Einfachheit halber unter Weglassung aller übrigen Bauteile der Kugelstange in den Fig. 13 bis 16 als Einzelheit gezeigte elektromotorische Ausrückung für den Sperrbolzen 11 sieht vor, dass die damit verschraubte Axial-Schubstange 17 mit ihrem freien, antriebsseitigen Ende in Wirkverbindung mit einer direkt auf der Welle des Antriebs 23 gelagerten Steuerscheibenanordnung steht. Diese umfasst in einem - aus Gründen der besseren Übersicht und der einfacheren Darstellung nicht gezeigten - z. B. U-förmigen, mit seinem einen Flansch vorne am Antrieb 23 befestigten Gabelkopf oder Gehäuse, in dessen gegenüberliegendem Flansch oder Gehäusewand das Wellenende 46 der Antriebswelle 47 gelagert ist, zwischen den Gabelkopf-Flanschen oder Gehäusewänden eingeschlossen vier Steuerscheiben 48a bis 48d. Diese sind sämtlich identisch mit Nocken 49 und nasenartigen Nockenvorsprüngen 50a bzw. 50b ausgebildet. Die innenliegenden Steuerscheiben 48b,c sind aber mit ihren nasenartigen Nockenvorsprüngen 50b entgegengesetzt, nämlich nach unten weisend angeordnet, während demgegenüber die nasenartigen Nockenvorsprünge 50a der beiden äußeren Steuerscheiben 48a und 48d nach oben weisend vorgesehen sind.

Auf einer in den Flanschen bzw. Gehäusewänden gelagerten Schwenkachse 51 ist ein rahmenartiger Wipphebel 52 angeordnet, dessen dem Sperrkopf 11 zugewandten, vorderen Hebelenden 52a in der Bewegungsbahn der innenliegenden Steuerscheiben 48b und 48c liegen, während das hintere Wipphebelende 52b bzw. dessen Rahmenträger über den außenliegenden Steuerscheiben 48a und 48d liegt und nach innen vorkragende Anschlagbegrenzungen 53 aufweist. In diesem Bereich des hinteren Wipphebelendes 52b sind den Rahmenträgern des Wipphebels 52 Druckfedern 54 zugeordnet, die den Wipphebel 52 im Uhrzeigersinn beaufschlagen und das hintere Wipphebelende 52b in Richtung auf die Steuerscheiben 48a bis 48d bewegen. Die durch eine Durchgangsöffnung im Steg des U-förmigen Gabelkopfes oder einer Gehäusewandung hindurchgeführte und sich mit ihrem vorderen Ende bis vor die Schwenkachse 51 des Wipphebels 52 erstreckende Axial-Schubstange 17 ist dort an ihrem vorderen Ende mit einem Querbolzen 55 versehen, der sich in der Bewegungsbahn der beiden innenliegenden Steuerscheiben 48b und 48c befindet.

Wenn die Kugelstange zum Verschwenken ausgelöst und folglich der Sperrbolzen 11 unter Vorspannung der diesen beaufschlagenden Druckfeder 18 ausgerückt werden muß, wirken die außenliegenden Steuerscheiben 48a und 48d mit ihren die nach unten aufweisenden nasenartigen Nockenvorsprünge 50a besitzenden Nocken 49 gegen die Kraft der Druckfedern 54 und heben das vordere Wipphebelende 52a an bzw. drücken das hintere Wipphebelende 52b im Gegenuhrzeigersinn nach außen. Sobald dann die beiden innenliegenden Steuerscheiben 48b und 48c mit ihren nach unten weisenden nasenartigen Nockenvorsprüngen 50b auf den Querbolzen 55 der Axial-Schubstange 17 auftreffen, ziehen sie diese nach hinten, bis der Sperrbolzen 11 ausgerückt ist. Diese Endlage des Ausrückhubes ist dann erreicht, wenn der Querbolzen 55 seinen Halt bzw. Kontakt zu den innenliegenden Steuerscheiben 48b und 48c, wie auch der Wipphebel 52 seinen Halt zu den äußeren Steuerscheiben 48a bzw. 48d verloren hat, da sich die Steuerscheiben sämtlich gleichmäßig weiter drehen. Der Wipphebel liegt frei auf. Nach einer vollen Umdrehung schaltet eine Sensorik den Antrieb 23 aus, bis ein nächster Auslösevorgang eingeleitet wird.

Das hintere Wipphebelende 52b wird von den Anschlagbegrenzungen 53 auf dem Querbolzen 55 gehalten und das vordere Wipphebelende 52a kommt zur Anlage an die die nach unten weisenden nasenartigen Nockenvorsprünge 50b besitzenden innenliegenden Steuerscheiben 48b bzw. 48c, womit sich eine Bremswirkung einstellt, die verhindert, dass eventuelle Massenträgheiten die Steuerscheiben weiter drehen. Sobald die Kugelstange dann ihre Endlage (Ruhe- oder Betriebsstellung) einnimmt, schiebt die Druckfeder 18 den Sperrbolzen 11 samt Axial-Schubstange 17 zurück in die Ausgangslage. Der Wipphebel 52 wird durch die Druckfedern 54 im Uhrzeigersinn verschwenkt und bildet mit den Anschlagbegrenzungen 53 eine Sperre gegen ein unbeabsichtigtes Auslösen des Systems.

## Patentansprüche

1. Anhängerkupplung (1) für Kraftfahrzeuge, umfassend eine fahrzeugfest angeordnete, aus einer verriegelten Ruhestellung in eine verriegelte Betriebsstellung und umgekehrt schwenkbar gelagerte, durch einem Antrieb angetriebene Kugelstange (3), die an ihrem freien, vom Kugelstangenlagerkopf (4) entfernten Ende eine Kupplungskugel (2) trägt, wobei der Kugelstange (3) zum Festlegen bzw. Freigeben der Verriegelung ein im Bereich des Kugelstangenlagerkopfes mit radial ein- und ausrückbaren Rastmitteln (12; 13) zusammenwirkender, axial verstellbarer, gegen ein anstehendes Kraftelement zurückstellbarer Sperrbolzen (11) zugeordnet ist
**dadurch gekennzeichnet,**
**dass** der Sperrbolzen (11) zur Antriebsseite hin mit einer Axial-Schubstange (16; 17) ausgebildet und über die Axial-Schubstange (16; 17) motorisch ausrückbar an den Antrieb (23) angeschlossen ist und der Sperrbolzen (11) zentral in einer Hohlwelle (8) angeordnet ist, auf der der Kugelstangenlagerkopf (4) gelagert ist.

2. Anhängerkupplung nach Anspruch 1,
**dadurch gekennzeichnet,**
**daß** das antriebsseitige, durch einen Anbauflansch (5) hindurchgeführte Ende der Axial-Schubstange (16) als Zahnstange (20) ausgebildet ist, die mit einem Zahnelement (39; 40, 41) kämmt, das temporär antriebsmäßig über einen Mitnehmerstift (42) mit einem von einem Motorritzel (25) beaufschlagten Antriebsrad (26) verbindbar ist.

3. Anhängerkupplung nach Anspruch 2,
**dadurch gekennzeichnet,**
**daß** das Zahnelement als Ritzel (40) mit zumindest einer Teilverzahnung im Eingriffsbereich mit der Zahnstange (20) ausgebildet ist.

4. Anhängerkupplung nach Anspruch 2 oder 3,
**dadurch gekennzeichnet,**
**daß** der Mitnehmerstift (42) mit Kraftbeaufschlagung in Richtung auf das Zahnelement (39; 40, 41) in einer Bohrung (37) eines Zylinderkörpers (27) des Antriebsrades (26) oder eines Zylinderkörpers (27) des Zahnelementes (41) angeordnet ist.

5. Anhängerkupplung nach einem der Ansprüche 2 bis 4,
**dadurch gekennzeichnet,**
**daß** das Antriebsrad (26) in einem außerhalb der Umlaufbahn des Zylinderkörpers (27) liegenden Teilabschnitt mit einem Kurvensegment (28) versehen ist, dem ein gegen das Antriebsrad (26) abgestützter, mit einer Einschnürung (35) ausgebildeter Sicherungsbolzen (31) zugeordnet ist, wobei die Einschnürung (35) temporär aus ihrer in die Zahnstange (20) eingreifenden Position verlagerbar ist.

6. Anhängerkupplung nach Anspruch 5,
**dadurch gekennzeichnet,**
**daß** das Kurvensegment (28) an seinem in Drehrichtung des Antriebsrades (18) vorderen Ende mit einer allmählich ansteigenden, konvexen Anlauffläche (29) und an seinem hinteren Ende mit einer steil abfallenden, mit konkaver Krümmung auslaufenden Ablauffläche (30) ausgebildet ist.

7. Anhängerkupplung nach einem der Ansprüche 2 bis 6,
**dadurch gekennzeichnet,**
**daß** die Zahnstange (20) an ihrer der Einschnürung (35) des Sicherungsbolzens (31) zugewandten Seite mit einer Abflachung (21) ausgebildet ist.

8. Anhängerkupplung nach Anspruch 1,
**dadurch gekennzeichnet,**
**daß** die Axial-Schubstange (17) an ihrem vorderen, von dem Sperrbolzen (11) entfernten Ende mit einem Querbolzen (55) versehen ist, dem auf einer Welle (47) des Antriebs (23) angeordnete Steuerscheiben (48a bis d) zur Mitnahme und Hubbegrenzung zugeordnet sind.

9. Anhängerkupplung nach Anspruch 8,
**dadurch gekennzeichnet,**
**daß** die Steuerscheiben (48a bis d) mit nasenartigen Nockenvorsprüngen (50a bzw. 50b) ausgebildet und derart angeordnet sind, dass innenliegende Steuerscheiben (48b, 48c) mit ihren nasenartigen Nockenvorsprüngen (50b) entgegengesetzt zu den nasenartigen Nockenvorsprüngen (50a) der äußeren Steuerscheiben (48a, 48d) ausgerichtet angeordnet sind.

10. Anhängerkupplung nach Anspruch 8 oder 9,
**dadurch gekennzeichnet,**
**daß** ein in einem auf einem Antriebsgehäuse (23) befestigten Aufnahmemittel mit einer Schwenkachse (51) gelagerter Wipphebel (52; 52a, b) gegen die Steuerscheiben (48a bis d) kraftbeaufschlagt ist und im Hubweg der Axial-Schubstange (17) liegende Anschlagbegrenzungen (53) für den Querbolzen (55) aufweist.

11. Anhängerkupplung nach einem der Ansprüche 1 bis 10,
**dadurch gekennzeichnet,**
**daß** dem Spenjoolzen (11) in zwei im Abstand parallel voneinander vorgesehenen Radialebenen (I; II) gegenläufig wirkende Rastmittel (12; 13) zugeordnet sind.

## Claims

1. A trailer coupling (1) for motor vehicles, comprising a ball bar (3) which is arranged fixedly on the vehicle, which is mounted so that it can pivot from a locked rest position into a locked operating position and conversely, and which is driven by a drive, and which carries a coupling ball (2) at its free end remote from the ball-bar bearing head (4), wherein the ball bar (3) is assigned an axially adjustable locking pin (11), which cooperates with locating means (12, 13) capable of being engaged and disengaged radially in the area of the ball-bar bearing head, and which can be set back against an in-situ force element, **characterised in that** the locking pin (11) is configured as an axial connecting rod (16; 17) towards the drive side and is connected via the axial connecting rod (16; 17) to the drive (23) so that it can be disengaged by motor, and that the locking pin (11) is disposed centrally in a hollow shaft (8) on which the ball-bar bearing head (4) is mounted.

2. The trailer coupling according to claim 1, **characterised in that** the drive-side end of the axial connecting rod (16) which is guided through a mounting flange (5), is configured as a toothed rod (20) which engages with a toothed element (30; 40, 41) which can be temporarily drivingly connected to a drive wheel (26) upon which a motor pinion (25) acts, via a driving pin (42).

3. The trailer coupling according to claim 2, **characterised in that** the toothed element is configured as a pinion (40) with at least one partial toothed structure in the engagement area with the toothed rod (20).

4. The trailer coupling according to claim 2 or 3, **characterised in that** the driving pin (42) is arranged in a hole (37) of a cylinder body (27) of the drive wheel (26) or of a cylinder body (27) of the toothed element (41) with force acting in the direction of the toothed element (39; 40, 14).

5. The trailer coupling according to any one of claims 2 to 4, **characterised in that** the drive wheel (26) is provided with a curve segment (28) in a partial section located outside the orbit of the cylinder body (27), to which a securing pin (31) supported against the drive wheel (26) and configured as a constriction (35) is assigned, wherein the constriction (35) can be displaced temporarily from its position engaging in the toothed rod (20).

6. The trailer coupling according to claim 5, **characterised in that** at its front end in the direction of rotation of the drive wheel (18), the curve segment (28) is configured with a gradually ascending convex thrust face (29) and at its rear end is configured with a steeply descending run-out face (30) having concave curvature.

7. The trailer coupling according to any one of claims 2 to 6, **characterised in that** on its side facing the constriction (35) of the securing pin (31), the toothed rod (20) is configured with a flattened section (21).

8. The trailer coupling according to claim 1, **characterised in that** at its front end remote from the locking pin (11), the axial connecting rod (17) is provided with a cross pin (55) which has control disks (48a to d) disposed on a shaft (47) of the drive (23) for driving and stroke limitation.

9. The trailer coupling according to claim 8, **characterised in that** the control disks (48a to b) are configured with nose-like cam projections (50a or 50b) and are arranged in such a manner that inner control disks (48b, 48c) are arranged with their nose-like cam projections (50b) aligned opposite to the noselike cam projections (50a) of the outer control disks (48a, 48b).

10. The trailer coupling according to claim 8 or 9, **characterised in that** a rocker lever (52; 52a, b) mounted in a receiving means fastened on a drive housing (23) with pivot axis (51) is loaded against the control disks (48a to d) and has stop limiters (53) for the cross-pins (55) located in the stroke path of the axial connecting rod (17).

11. The trailer coupling according to any one of claims 1 to 10, **characterised in that** locating means (12; 13) acting in opposite directions in two radial planes (I; II) provided at a distance parallel to one another are assigned to the locking bolt (11).

## Revendications

1. Attelage de remorque (1) pour des véhicules automobiles, comprenant une barre d'attelage (3), disposée de façon stationnaire sur le véhicule, logée de façon à pivoter d'une position de repos verrouillée dans une position de service verrouillée et inversement, qui sur son extrémité libre, éloignée de la tête de logement de la barre d'attelage (4) porte une boule d'attelage (2), pour la fixation oul a libération du verrouillage, un boulon d'arrêt (11) coopérant dans la zone de la tête de logement de la barre d'attelage avec un moyen d'enclenchement enclenchable et désenclenchable (12 ; 13) en direction radiale, réglable en direction axiale, susceptible d'être rappelé contre un élément de force affleurant étant associé à la barre d'attelage, **caractérisé en ce que**, en direction du côté d'entraînement, le boulon d'arrêt (11) est conçu avec une bielle axiale (16 ; 17) et par l'intermédiaire de la bielle axiale (16 ; 17), il est raccordé de façon débrayable par moteur sur l'entraînement (23) et le boulon d'arrêt (11) est disposé de façon centrale dans un arbre creux (8), sur lequel est logée la tête de logement de la barre d'attelage (4).

2. Attelage de remorque selon la revendication 1, **caractérisé en ce que**, l'extrémité de la bielle axiale (16) traversant côté entraînement une bride rapportée (5) est conçue en tant que crémaillère (20) qui s'engrène dans un élément denté (39; 40, 41) qui est susceptible d'être relié temporairement par entraînement via une tige d'entraînement (42) avec une roue d'entraînement (26) soumise à un pignon moteur (25).

3. Attelage de remorque selon la revendication 2, **caractérisé en ce que**, l'élément denté est conçu en tant que pignon (40) avec au moins une denture partielle dans la zone d'engagement avec la crémaillère (20).

4. Attelage de remorque selon la revendication 2 ou 3, **caractérisé en ce que**, la tige d'entraînement (42) soumise à une force est disposée en direction de l'élément denté (39 ; 40, 41) dans un perçage (37) d'un corps cylindrique (27) de la roue d'entraînement (26) ou d'un corps cylindrique (27) de l'élément denté (41).

5. Attelage de remorque selon l'une quelconque des revendications 2 à 4, **caractérisé en ce que**, dans une section partielle située à l'extérieur de la trajectoire circulaire du corps cylindrique (27), la roue d'entraînement (26) est munie d'un segment curviligne (28) auquel est associé un boulon de blocage (31), appuyé contre la roue d'entraînement (26), conçu avec un rétrécissement (35) le rétrécissement (35) étant déplaçable temporairement de sa position d'engagement dans la crémaillère (20).

6. Attelage de remorque selon la revendication 5, **caractérisé en ce que**, sur son extrémité antérieure, dans le sens de rotation de la roue d'entraînement (18) le segment curviligne (28) est conçu avec une surface d'arrêt (29) convexe à montée graduelle et sur son extrémité postérieure avec une surface de lancement (30) en pente raide, se finissant avec une courbure concave.

7. Attelage de remorque selon l'une quelconque des revendications 2 à 6, **caractérisé en ce que**, sur son côté faisant face au rétrécissement (35) du boulon de blocage (31), la crémaillère (20) est munie d'un méplat (21).

8. Attelage de remorque selon la revendication 1, **caractérisé en ce que**, sur son extrémité antérieure, éloignée du boulon d'arrêt (11), la bielle axiale (17) est munie d'un boulon transversal (55) auquel sont associées des cames de commande (48a à d) disposées sur un arbre (47) de l'entraînement (23), pour l'entraînement et la limitation de la levée.

9. Attelage de remorque selon la revendication 8, **caractérisé en ce que**, les cames de commande (48a bis d) sont conçues avec des saillies de cames (50a à 50b) de type taquets et sont disposées de sorte que, avec leurs saillies de cames (50b) de type taquets, des cames de commande intérieures (48b, 48c) sont disposées pour être orientées à l'opposée des saillies de cames (50a) de type taquets des cames de commande extérieures (48a, 48d).

10. Attelage de remorque selon la revendication 8 ou 9, **caractérisé en ce que**, un levier de basculement (52; 52a, b) logé avec un axe de pivotement (51) sur un moyen de logement fixé sur un carter d'entraînement (23) est soumis à une force à l'encontre des cames de commande (48a à d) et comporte des limitations par butée (53) situées dans la course de levée de la bielle axiale (17), pour le boulon transversal (55).

11. Attelage de remorque selon l'une quelconque des revendications 1 à 10, **caractérisé en ce que**, des moyens d'enclenchement (12 ; 13) agissant à contresens sont associés au boulon d'arrêt (11), dans deux plans radiaux (I ; II) prévus à la parallèle l'un à l'autre avec un écart.
